# EUROPEAN PATENT SPECIFICATION

(11) **EP 0 769 784 B1**
(45) Date of publication and mention of the grant of the patent: **02.06.1999**
(21) Application number: 96202814.8
(22) Date of filing: 10.10.1996
(51) Int. Cl.: G21C 3/322, G21C 3/352

(54) **A nuclear fuel assembly and a spacer for a nuclear fuel assembly**
Kernbrennelement und ein Abstandshalter für ein Kernbrennelement
Assemblage de combustible nucléaire et une grille d'espacement pour un assemblage de combustible nucléaire

(30) Priority: 20.10.1995 SE 9503691
(43) Date of publication of application: 23.04.1997
(73) Proprietor: ABB ATOM AB, 721 63 Västeras (SE)
(72) Inventor: Farkas, Tibor, S-723 49 Västeras (SE); Hammar, Johan, S-731 30 Köping (SE)
(74) Representative: Dahlstrand, Björn

(56) References cited:
- EP-A- 0 291 748
- EP-A- 0 602 876
- WO-A-91/13442
- US-A- 3 423 287
- US-A- 5 299 245

## Description

### TECHNICAL FIELD

The present invention relates to a spacer for a nuclear fuel assembly for a light-water nuclear reactor, more particularly a boiling water reactor or a pressurized-water reactor, and a nuclear fuel assembly comprising spacers according to the present invention. The fuel assembly comprises a bundle of elongated elements which are retained and fixed by a number of spacers arranged in spaced relationship to each other along the bundle. The spacers comprise a number of cells for mutually fixing the elongated elements. A coolant is adapted to flow from below and up through the normally vertically arranged fuel assembly and, during a nuclear reaction, to cool the elongated elements arranged in the assembly.

### BACKGROUND ART, PROBLEMS

The design of the spacers comprised by the fuel assembly is very important for the performance of the fuel assembly. It is important that these spacers, which are placed in spaced relationship to each other along the bundle of the elongated elements, have a low resistance to the coolant flow which, inside the fuel assembly, flows along the bundle through the spacers, and also that they are constructed from a small quantity of material which has a small influence on the neutron absorption.

Known spacers comprise a grid structure of wavy sheet-metal strips, arranged crosswise and standing on edge, which form substantially square cells. Such a spacer is disclosed, for example, in US 3,423,287. The spacer shown in US 3,423,287 comprises strip elements which are bent in alternating directions in intervals corresponding to the distance between two elongated elements, forming a wavy structure where the bends of the strip elements constitute relatively stiff supports for the elongated elements extending through the spacer cells. The resilient supports consist of resilient means formed in the cells and in the wall surface of the wavy strip elements and extending into a cell therefrom.

In relation to other spacer grids, the wavy structure is simple to manufacture since the resilient means and the fixed supports are integrated into the wall surfaces of the strip elements. The spacer described is typically designed in Zircaloy.

When using spacers of crossed strip elements in a boiling reactor, the cooling properties of the spacer are not so good as would be desirable. This is due to the coolant accumulating around the points of intersection between the strip elements, that is, the coolant deviates from the elongated elements and accumulate between the elongated elements, at a distance therefrom, resulting in reduced cooling properties of the coolant. By a suitable mixing of the coolant, the cooling properties may be considerably improved.

Known spacers often comprise some form of mixing vanes arranged at that edge of the spacer which is normally arranged downstream in a fuel assembly for the purpose of achieving improved cooling by a suitable mixing of the upwardly-flowing coolant. The spacer shown in US 3,423,287 is not provided with such vanes.

US 5,299,245 discloses a spacer of interleaved, non-wavy, strip elements standing on edge, the downstream edge of which is provided with mixing vanes extending from the edge and downstream. The mixing vanes are arranged such that four mixing vanes extend into each individual cell.

The object of the invention is to achieve a robust spacer with good cooling properties and low pressure drop.

### SUMMARY OF THE INVENTION, ADVANTAGES

The present invention relates to a spacer with a grid structure of crossed first and second wavy strip elements standing on edge, the spacer being provided at its downstream edge with mixing vanes and a fuel assembly comprising such spacers. The spacer according to the invention provides good cooling properties and a low pressure drop and is achieved by means of the characteristic features according to the characterizing part of claim 1, and the fuel assembly is achieved according to the characterising part of claim 7.

The spacer according to the invention comprises a preferably orthogonal grid structure of cells formed from the crossed first and second wavy strip elements standing on edge. The first strip elements are arranged parallel to each other at a mutual distance corresponding to one rod pitch (the distance between the centre axes of two adjacent elongated elements). The second strip elements are arranged in a corresponding way, preferably perpendicularly to the first strip elements.

At the downstream edge of the spacer, mixing vanes are formed in the first strip elements. A mixing vane is formed by arranging a slit substantially parallel to the axial direction of the spacer and bending the cell wall formed between a point of intersection between the first and second strip elements and the slit into the spacer cell. The mixing vanes are retracted into the structure of the spacer so as not to extend outside the axial length thereof in the direction of flow of the coolant. The object of the mixing vanes is to direct the coolant, flowing through the spacer, towards the central parts of the spacer cells to achieve improved cooling of the elongated elements.

At the downstream edge of the spacer, openings are provided in the second strip elements. An opening is formed through a recess in the second strip element. The object of the openings is to additionally increase the turbulence in the coolant flow in order thus to further improve the cooling properties of the spacer while at the same time achieving a low pressure drop across the spacer.

The mixing vanes and the openings are adapted such that substantially each spacer cell comprises two mixing vanes and four openings.

The advantage of the invention is that a spacer with very good cooling properties and low flow resistance and hence low pressure drop is obtained. The retracted mixing vanes result in saving of material. Further, the retracted mixing vanes facilitate the handling and mounting of the bundle of elongated elements retained by the spacer, and reduce the risk of problems caused by damaged mixing vanes.

### BRIEF DESCRIPTION OF THE DRAWINGS

Figure 1a shows in a section A-A in Figure 1b a boiling water fuel assembly with spacers.

Figure 1b shows in a section B-B in Figure 1a the same fuel assembly.

Figure 2 shows a pressurized-water fuel assembly with spacers.

Figure 3a shows in a view from above a spacer according to the invention, formed from crossed, wavy strip elements standing on edge, whereby that edge of the strip elements, which is normally arranged downstream in a fuel assembly, is provided with mixing vanes retracted in the wall of the spacer cell.

Figure 3b shows an enlargement of part of Figure 3a.

Figure 4 shows in a section A-A in Figure 3b how mixing vanes are retracted in that edge of the spacer which is normally arranged downstream in a fuel assembly, and formed from a tab folded from the wall surface of the strip element and into a spacer cell.

Figure 5 shows in a section B-B in Figure 3b how triangular openings are integrated into that edge of the spacer which is normally arranged downstream in a fuel assembly.

### DESCRIPTION OF THE PREFERRED EMBODIMENTS

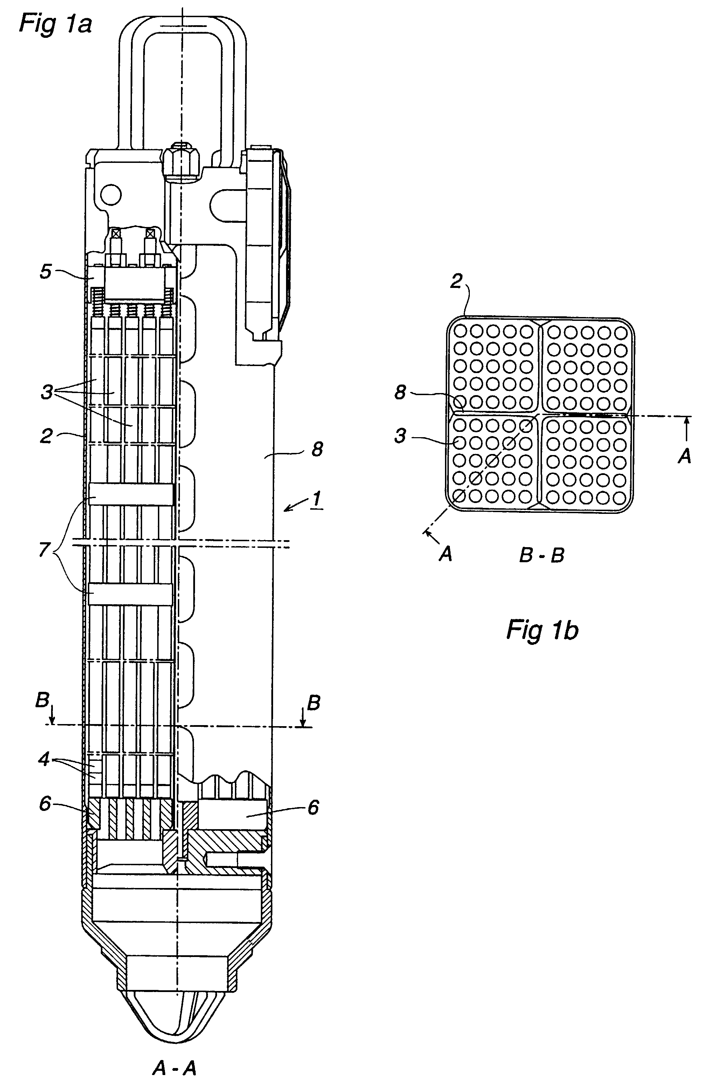

Figure 1a shows a boiling water fuel assembly 1 which comprises a long tubular container, of rectangular cross section, referred to as fuel channel 2. The fuel channel 2 is open at both ends so as to form a continuous flow passage through which the coolant of the reactor flows. The fuel assembly 1 comprises a large number of equally long tubular fuel rods 3, arranged in parallel in a bundle, in which pellets 4 of a nuclear fuel are arranged. The fuel rods 3 are arranged spaced from each other in four orthogonal sub-bundles by means of a cruciform support means 8 (see also Figure 1b). The respective sub-bundle of fuel rods 3 is retained at the top by a top tie plate 5 and at the bottom by a bottom tie plate 6. The fuel rods 3 in the respective sub-bundle are kept spaced apart from each other by means of spacers 7 and are prevented from bending or vibrating when the reactor is in operation. The spacer according to the invention may, of course, also be used in a boiling water reactor which lacks the cruciform support means 8 and instead is provided with, for example, one or more water tubes.

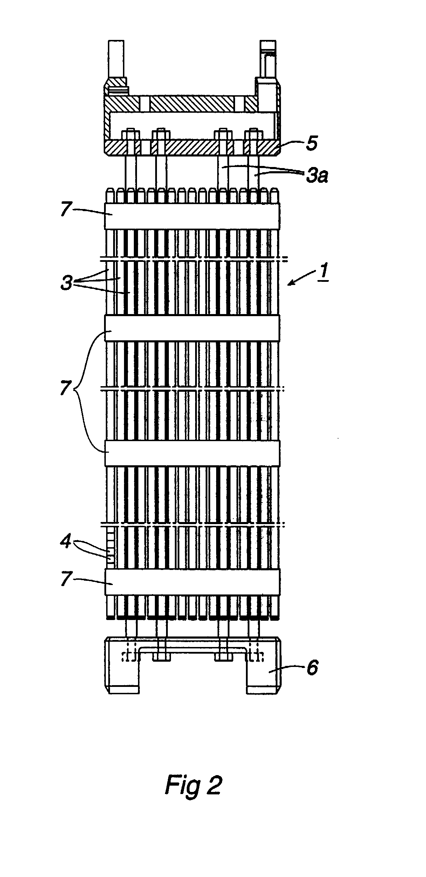

Figure 2 shows a pressurized-water fuel assembly 1 comprising a number of elongated tubular fuel rods 3 and control rod guide tubes 3a arranged in parallel. In the fuel rods 3, pellets 4 of a nuclear fuel are arranged. The control rod guide tubes 3a are retained at the top by a top tie plate 5 and at the bottom by a bottom tie plate 6. The elongated elements 3, 3a are kept spaced apart from each other by means of spacers 7.

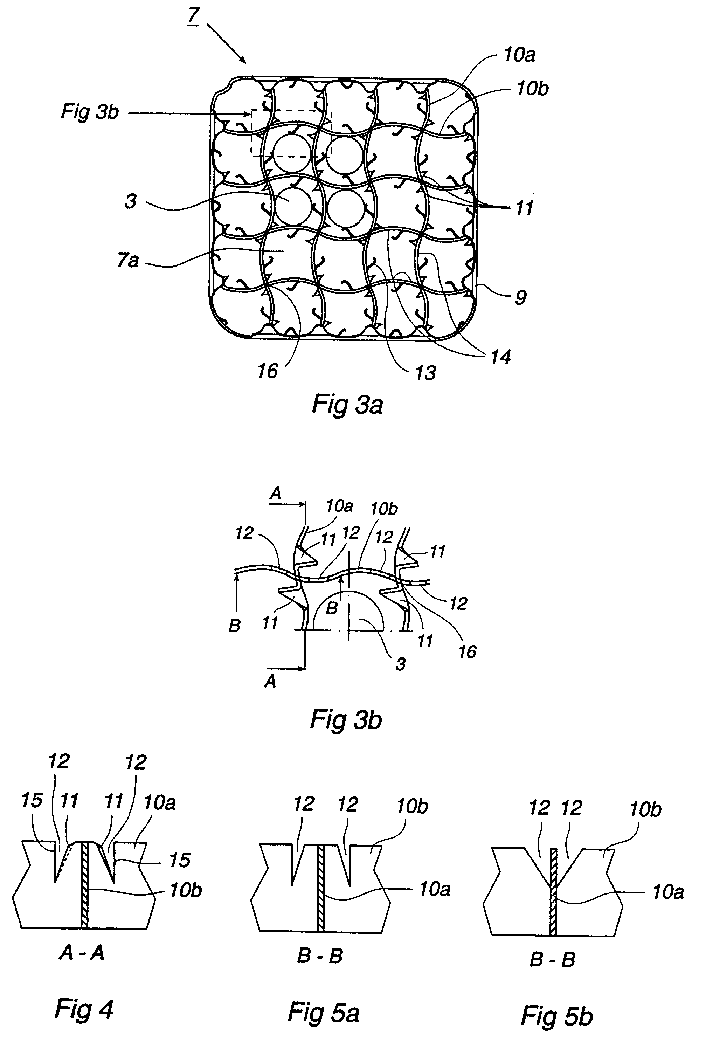

The spacer 7 is thus intended to position a plurality of elongated elements, for example fuel rods 3 or control rod guide tubes 3a, extending through the spacer. The preferably orthogonal grid structure is usually surrounded by a sleeve-shaped structure, as indicated especially in Figure 3a.

Figure 3a and 3b show a spacer grid with spacer cells 7a formed of crossed, wavy first and second strip elements 10a, 10b, standing on edge, whereby that edge of the strip elements, which is normally arranged downstream in a fuel assembly, is provided with mixing vanes 11 retracted in the wall and openings 12 of the spacer cell 7a. The mixing vanes 11 and the openings 12 are adapted such that, substantially each spacer cell 7a, at its downstream edge, comprises two mixing vanes 11 and four openings 12.

A cell 7a in the grid structure is intended to support, on four sides, an elongated element 3, 3a extending therethrough. For this purpose, two fixed and two resilient supports are provided in each cell 7a. The resilient supports consist of supporting means 13 punched out of the cell wall and bent into the cell. The fixed supports consist of the waviness of the strip elements 10a, 10b such that a bend 14 of the strip element 10a, 10b on its convex side is arranged supporting against an elongated element 3, 3a and on its concave side, via a punched-out resilient means 13, is arranged supporting against an elongated element 3, 3a in an adjacent spacer cell 7a.

Figure 4 shows in a section A-A in Figure 3b that a slit 15 is provided at the downstream edge of the first strip elements 10a and at the point of intersection 16 between two crossed strip elements 10a, 10b. The material between the slit 15 and the point of intersection 16 is arranged folded into a spacer cell 7a, forming the above-mentioned mixing vane 11. At substantially each point of intersection 16, two mixing vanes 11 are arranged retracted into the walls of the spacer cells 7a.

Figures 5a and 5b show in a section B-B in Figure 3b, in two embodiments, an opening 12 arranged at the downstream edge of the second strip elements 10b and at the point of intersection 16. At substantially each point of intersection 16, four openings 12 are arranged retracted into the walls of the spacer cells.

## Claims

1. A spacer (7) intended to retain, at a plurality of levels along a longitudinal or axial direction of elongated elements (3, 3a) in a nuclear reactor fuel assembly, which spacer (7) having the same axial direction comprises a preferably orthogonal grid structure of spacer cells (7a) formed from crossed first and second strip elements (10a, 10b) standing on edge, forming points of intersection (16) and with an edge normally arranged downstream in a nuclear reactor core, **characterized** in that, at the downstream edge, the first strip elements (10a) comprise mixing vanes (11) and the second strip elements (10b) comprise openings (12) and that a mixing vane (11) is formed by arranging a slit (15) substantially parallel to the axial direction of the spacer (7) and by bending the cell wall formed between the point of intersection (16) and the slit (15) into the spacer cell (7a) and that an opening (12) is formed by a recess in the second strip element (10b).

2. A spacer (7) according to claim 1, **characterized** in that the mixing vanes (11) and the openings (12) are arranged such that substantially each spacer cell (7a) comprises two mixing vanes (11) and four openings (12) where two of the openings (12) are formed when designing the respective mixing vanes.

3. A spacer (7) according to claim 1 or 2, **characterized** in that the mixing vanes (11) and the openings (12) are arranged in close proximity to the points of intersection (16).

4. A spacer (7) according to claim 1, 2 or 3, **characterized** in that the strip elements (10a, 10b) are made wavy.

5. A spacer (7) according to claim 1, 2, 3 or 4, **characterized** in that it is made of a zirconium alloy.

6. A fuel assembly for a boiling water nuclear reactor, **characterized** in that it comprises a spacer according to any of the preceding claims.

## Patentansprüche

1. Distanzhalter (7) vorgesehen auf einer Reihe von Ebenen entlang der längslaufenden oder achsialen Richtung längliche Elemente (3, 3a) in einer Brennstoffvorrichtung für einen Kernreaktor festzuhalten, wobei der Distanzhalter (7) eine vorzugsweise rechteckige Gitterstruktur der Distanzhalterzellen (7A) umfaßt, die aus gekreuzten, ersten und zweiten, auf der Kante stehenden Streifendementen (10a, 10b) gebildet werden, die Schnittstellen (16) bilden und gewöhnlicherweise stromabwärts in einem Kernreaktorkern angeordnet sind, **dadurch gekennzeichnet,** daß die ersten Streifenelemente (10a) an der stromabwärts liegenden Kante Mischschaufeln (11) und die zweiten Streifenelemente (10b) Öffnungen (12) umfassen und daß eine Mischschaufel (11) dadurch gebildet wird, daß ein im wesentlichen parallel zur achsialen Richtung des Distanzhalters (7) laufender Schlitz (15) angeordnet ist und indem die Zellwand zwischen der Schnittstelle (16) und dem Schlitz (15) in die Distanzhalterzelle (7a) hinein gebildet wird und daß eine Öffnung (12) von einer Nische im zweiten Streifenelement (10b) gebildet wird.

2. Brennstoffvorrichtung gemäß Patentanspruch 1, **dadurch gekennzeichnet,** daß die Mischschaufeln (11) und die Öffnungen (12) so angeordnet sind, daß im wesentlichen jede Distanzhalterzelle (7a) zwei Mischschaufeln (11) und vier Öffnungen (12) umfaßt, wobei zwei Öffnungen (12) durch Ausbildung der entsprechenden Mischschaufeln gebildet werden.

3. Brennstoffvorrichtung gemäß Patentanspruch 1 oder 2, **dadurch gekennzeichnet,** daß die Mischschaufeln (11) und die Öffnungen (12) nahe den Schnittstellen (16) angeordnet sind.

4. Brennstoffvorrichtung gemäß Patentanspruch 1, 2 oder 3, **dadurch gekennzeichnet,** daß die Streifenelemente (10a, 10b) wellig ausgeführt sind.

5. Brennstoffvorrichtung gemäß Patentanspruch 1, 2, 3 oder 4, **dadurch gekennzeichnet,** daß sie aus einer Zirkoniumlegierung besteht.

6. Brennstoffvorrichtung für einen Siedewasserreaktor, **dadurch gekennzeichnet,** daß sie einen Distanzhalter gemäß einem der vorhergehenden Patentanprüche umfaßt.

## Revendications

1. Entretoise (7) destinée à maintenir, à une pluralité de niveaux le long d'une direction axiale ou longitudinale d'éléments (3, 3a) oblongs d'un assemblage combustible de réacteur nucléaire, l'entretoise (7) ayant la même direction axiale comportant une structure de grille de préférence orthogonale de cellules (7a) d'entretoises formées à partir de premiers et seconds éléments (10a, 10b) formant bandes entrecroisées reposant sur champ, formant des points (16) d'intersection et ayant un bord normalement disposé en aval dans un coeur de réacteur nucléaire, caractérisée en ce que, au bord en aval, les premiers éléments (10a) formant bandes comportent des aubes (11) de mélange et les seconds éléments (10b) formant bandes comportent des ouvertures (12) et en ce qu'une aube (11) de mélange est formée en agençant une fente (15) sensiblement parallèlement à la direction axiale de l'entretoise (7) et en courbant la paroi de cellule formée entre le point d'intersection (16) et la fente (15) pour former la cellule (7a) d'entretoise et en ce qu'une ouverture (12) est formée par un évidement dans le second élément (10b) formant bande.

2. Entretoise (7) suivant la revendication 1, caractérisée en ce que les aubes (11) de mélange et les ouvertures (12) sont agencées de sorte que sensiblement chaque cellule (7a) d'entretoise comprend deux aubes (11) de mélange et quatre ouvertures (12), où deux des ouvertures (12) sont formées lorsque l'on conçoit les aubes de mélange respectives.

3. Entretoise (7) suivant la revendication 1 ou 2, caractérisée en ce que les aubes (11) de mélange et les ouvertures (12) sont agencées à proximité proche des points d'intersection (16).

4. Entretoise (7) suivant la revendication 1, 2 ou 3, caractérisée en ce que les éléments (10a, 10b) formant bandes sont réalisés ondulés.

5. Entretoise (7) suivant la revendication 1, 2, 3 ou 4, caractérisée en ce qu'elle est fabriquée en alliage de zirconium.

6. Assemblage combustible pour un réacteur nucléaire à eau bouillante, caractérisé en ce qu'il comprend une entretoise suivant l'une quelconque des revendications précédentes.
